Europäisches Patentamt

(19) European Patent Office

Office européen des brevets

(11) Publication number: **0 457 541 A1**

## (12) EUROPEAN PATENT APPLICATION

(21) Application number: **91304295.8**

(51) Int. Cl.⁵: **G06K 11/18, G01P 15/08**

(22) Date of filing: **14.05.91**

(30) Priority: **18.05.90 GB 9011183**

(43) Date of publication of application:
**21.11.91 Bulletin 91/47**

(84) Designated Contracting States:
**DE FR GB**

(71) Applicant: **BRITISH AEROSPACE PUBLIC LIMITED COMPANY**
**11 Strand**
**London WC2N 5JT (GB)**

(72) Inventor: **Varnham, M. P., British Aerospace Public Ltd. Co.**
**Dynamics Division, Six Hills Way**
**Stevenage, Herts, SG1 2DA (GB)**

Inventor: **Norris, T.S., British Aerospace Public Ltd. Co.**
**Dynamics Division, Six Hills Way**
**Stevenage, Herts, SG1 2DA (GB)**
Inventor: **Hodgins, D., British Aerospace Public Ltd. Co.**
**Dynamics Division, Six Hills Way**
**Stevenage, Herts, SG1 2DA (GB)**
Inventor: **Thomas, H.D., British Aerospace Public Ltd. Co.**
**Dynamics Division, Six Hills Way**
**Stevenage, Herts, SG1 2DA (GB)**

(74) Representative: **Dowler, Edward Charles et al**
**British Aerospace plc Corporate IPR Department, Headquarters P.O.Box 87 Building Q191 Royal Aerospace Establishment**
**Farnborough Hants GU14 6YU (GB)**

(54) **Control devices.**

(57)    A hand-held controller employing inertial sensors is proposed for controlling toys, computers and other equipments requiring accurate steering signals. The use of inertial sensors (accelerometers and gyroscopic devices) means that the angular and lateral movement of the hand-held controller in space provides the control signals and allows a large number of separate parameters to be varied simultaneously by one hand.

EP 0 457 541 A1

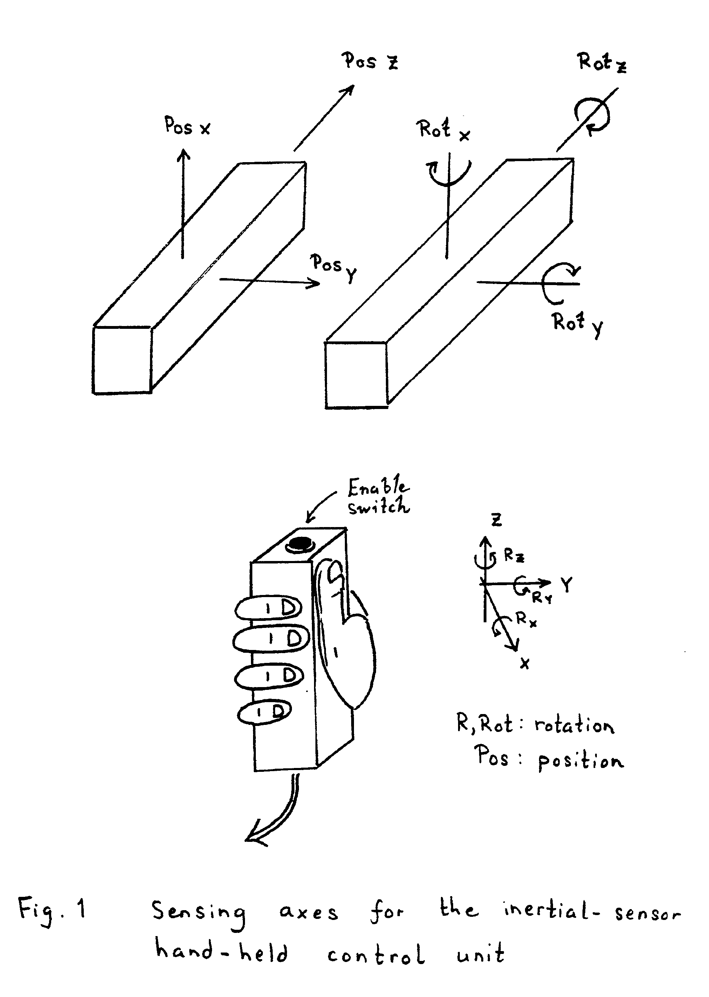

Fig. 1   Sensing axes for the inertial-sen:
hand-held control unit

This invention relates to a control device more particularly, to a remote hand-held control sender. Remote control senders have become very widely used in recent years for electrical equipment such as video recorders, televisions, light dimmers etc. It is also known to control computer terminals using a device known as a mouse, a joystick, or roller-ball controllers. These cause the cursor to move about the screen and can facilitate all control of the computer.

According to one aspect of the present invention, there is provided a control unit for controlling appliances and the like, comprising, one or more inertial sensors capable of sensing inertial movement and producing a control signal responsive thereto.

Reference will now be made, by way of example to the accompanying drawings, in which:-

Figure 1 is a schematic diagram of a hand held controller according to a first embodiment of the present invention.

Figure 2 is a schematic diagram of a hand held controller according to a second embodiment of the present invention.

Referring to figure 1 the controller shown generally at 1 includes at least one rate sensor, (not shown) which is capable of detecting rotation about one of the axis x, y or z. There may be one rate sensor for detecting rotation about each of the axes. The controller is caused to rotate about one or each of the axes, by any appropriate means. The rate sensor detects the rotation and generates an output signal responsive thereto. This output signal is dependant on the rate of rotation for the or each sensor and clearly a different signal may be produced for each sensor, depending on respective rotations. The output signal is used to generate a control signal which may be used, for example to move a cursor on a computer screen, move motors, control wheel chairs and other electrical developments. The control signal may be generated within the control or at the device to be controlled. It may be an electrical, sonar, radar, ultrasonic, radio or optical signal or any combination thereof.

The rate sensor may be of any known type for example, any type of gyroscopes, in particular fibre optic gyroscopes or a solid state gyroscope of the type described in our co-pending application ( our case ref: 08-6529 ).

The controller may be powered by a battery pack or by a mains supply.

The system shown in figure 2 is similar to that of figure 1, with the exception that instead of rate sensors, accelerometers are used to detect lateral movement along the x, y, z axes, as shown by the arrows. There may be one, two or three accelerometers positioned orthogonal to each other. Each accelerometer generates an output signal corresponding to movement along the respective axis, which as described above may be used to control a many and varied array of devices.

A controller may be designed with three accelerometers and three rates sensors, and detect respectively lateral and rotational movement thereby providing up to six control signals.

It should be noted that the sensors/accelerometers need not be positioned orthoganally, but may be positioned at any three different angles. In this case however, further electronic circuitry may be required to resolve the measured motion into its orthogonal components.

It should further be noted that the disadvantage of some inexpensive accelerometers and rate sensors, that may be used in a controller is that they display drift. This problem may be overcome by including an enable switch on the hand-held controller, say at 2. This could operate in a manner where the first press on the switch would have the effect of autonulling sensor signals and then enabling the control from the hand-held unit, and a second press would disable the controller. Since the enable switch would be pressed frequently between different operations, long-term sensor stability is not essential because the autonulling would accommodate the errors.

It should be still further noted that any inertial sensor other than gyroscopes, accelerometers, angular acclelrometers etc may be used in this invention, and that the controller may be used to control any device and is not merely limited to those mentioned herein. Also any combination of accelerometer and rate sensors could be used depending on the required application.

**Claims**

1. A control unit for controlling appliances and the like, comprising, one or more inertial sensors capable of sensing inertial movement and producing a control signal responsive thereto.

2. A control unit according to Claim 1, wherein there are three initial sensors positioned in different directions each to the others.

3. A control unit according to Claim 2, wherein the three inertial sensors are orthogonal to each other.

4. A control unit according to any one of Claims 1, 2 or 3, wherein the inertial sensors are rate sensors.

5. A control unit according to Claim 4, wherein the rate sensors are gyroscopes.

6. A control unit according to Claim 5, wherein the gyroscopes are fibre optic gyroscopes.

7. A control unit according to Claim 5 where the gyroscopes are solid state gyroscopes

8. A control unit according to any one of Claims 1, 2 or 3, wherein the inertial sensors are accelerometers.

9. A control unti according to anyone of claims 1, 2, or 3 wherein the inertial sensors are angular accelerometers.

10. A control unit according to Claim 1, where there are six inertial sensors, three of which are rate sensors and are orthogonal to each other and three of which are accelerometers, positioned along corresponding axes as the respective rate sensors.

11. A control unit according to any one of Claims 1 to 10, wherein the control signal is an electrical signal.

12. A control unit according to any one of Claims 1 to 10, wherein the control signal is an optical signal.

13. A control unit according to any one of Claims 1 to 10, wherein the control signal is an ultrasonic signal.

14. A control unit according to any one of Claims 1 to 10, wherein the control signal is an radio signal.

15. A control unit according to any one of Claims 1 to 10, wherein the control signal is an radar signal.

16. A control unit according to any one of Claims 1 to 10, wherein the control signal is an sonar signal.

17. A control unit for controlling appliances and the like, substantially as hereinbefore described with reference to, and as illustrated in, the accompanying drawings.

Fig. 1    Sensing axes for the inertial-sensor
hand-held control unit

**European Patent Office**

## EUROPEAN SEARCH REPORT

Application Number

EP 91 30 4295

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 922 444 (M. BABA) <br> * Column 3, lines 27-49; figures 2,4 * | 1-3,8, 11 | G 06 K 11/18 <br> G 01 P 15/08 |
| X | US-A-4 839 838 (LABICHE et al.) <br> * Column 3, line 55 - column 4, line 66; figures 1-5 * | 1,3,8, 11 | |
| A | | 10 | |
| X | US-A-4 787 051 (L.T. OLSON) <br> * Column 4, lines 26-48; figures 1,4 * | 1,8,12 | |
| Y | | 14 | |
| Y | EP-A-0 178 805 (MITSUBOSHI BELTING LTD) <br> * Page 3, lines 10-16; figure 4 * | 14 | |
| A | DE-A-3 036 949 (SIEMENS) <br> * Page 7, lines 9-24; fig. * | 12-16 | |
| | | | **TECHNICAL FIELDS SEARCHED (Int. Cl.5)** <br><br> G 01 P <br> G 06 K |

The present search report has been drawn up for all claims

| Place of search | Date of completion of the search | Examiner |
|---|---|---|
| THE HAGUE | 30-08-1991 | HANSEN P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)